# EUROPÄISCHE PATENTANMELDUNG

(11) **EP 4 616 975 A1**
(43) Veröffentlichungstag der Anmeldung: **17.09.2025**
(21) Anmeldenummer: 25162783.2
(22) Anmeldetag: 11.03.2025
(51) Int. Cl.: B21J 15/02, B21J 15/32, B23P 19/00, B23P 19/06

(54) **SETZEINRICHTUNG UND VERFAHREN ZU DEREN BETRIEB**

(30) Priorität: 11.03.2024 DE 102024106926
(71) Anmelder: Profil Verbindungstechnik GmbH & Co. KG, 61381 Friedrichsdorf (DE)
(72) Erfinder: Lebeau, Andreas, 61381 Friedrichsdorf (DE); Selmi, Sofian, 65929 Frankfurt am Main (DE)
(74) Vertreter: Manitz Finsterwald Patent- und Rechtsanwaltspartnerschaft mbB

(57) **Zusammenfassung**

Die vorliegende Erfindung betrifft eine Setzeinrichtung zur Befestigung eines Funktionselements an einem Werkstück, insbesondere an einem Blechteil. Sie umfasst einen Führungskanal und einen in dem Führungskanal axial bewegbaren Stempel, mit dem das Funktionselement durch den Führungskanal bewegbar ist. Ferner ist eine Zufuhreinrichtung vorgesehen, die einen Zufuhrkanal umfasst, der in den Führungskanal mündet, wobei eine Wirbelstromeinheit vorgesehen ist, mit der ein Magnetfeld erzeugbar ist, das einen Bremsabschnitt des Zufuhrkanals durchsetzt, so dass eine Geschwindigkeit eines in dem Zufuhrkanal bewegten Funktionselements reduzierbar ist. Die vorliegende Erfindung betrifft ferner ein Verfahren zum einer solchen Setzeinrichtung und eine Elementzufuhreinrichtung zum Transport von Funktionselementen.

## Beschreibung

Die vorliegende Erfindung betrifft eine Setzeinrichtung zur Befestigung eines Funktionselements an einem Werkstück, insbesondere an einem Blechteil, ein Verfahren zum Betrieb der Setzeinrichtung, und eine Elementzufuhreinrichtung zum Transport von Funktionselementen.

Funktionselemente werden in einer Vielzahl von Anwendungen eingesetzt, insbesondere in der Kraftfahrzeugtechnik. Sie dienen beispielsweise dazu, an einem Werkstück, Befestigungsmöglichkeiten für andere Werkstücke zu schaffen oder andere Funktionalitäten bereitzustellen, die sich nicht ohne weiteres oder nur unter großen Aufwand an dem Werkstück selbst ausbilden lassen. Dabei ist es natürlich wichtig, dass sich die Elemente auf effiziente Weise mit dem jeweiligen Werkstück verbinden lassen. Die Verbindung muss außerdem belastbar und zuverlässig sein.

Bei Funktionselementen kann es sich beispielsweise um Bolzenelemente, deren Schaft mit einem Gewinde versehen sein kann, oder um Mutterelemente handeln, die zum Beispiel ein Innengewinde aufweisen. Andere Bauformen sind denkbar. Beispielsweise können Funktionselemente auch Komponenten oder Abschnitte aufweisen, die für eine Rast- oder Steckverbindung vorgesehen sind.

Funktionselemente sind in verschiedenen Ausführungen bekannt. Es gibt beispielsweise Nietelemente, die einen Nietabschnitt aufweisen, welcher bei der Anbringung an einem Blechteil verformt wird, um einen Nietbördel auszubilden und mit einem Kopfteil eine ringförmige Aufnahme für den Rand eines Lochs im Blechteil zu bilden. Bei solchen Nietelementen wird also das Funktionselement bei der Anbringung an das Blechteil verformt. Nietelemente können selbststanzend sein. D.h. es muss in dem Werkstück kein vorbereitetes Loch vorhanden sein, in das der Nietabschnitt eingeführt wird, sondern der Nietabschnitt stanzt sich - salopp formuliert - sein eigenes Loch.

Ferner sind Einpresselemente bekannt, bei denen das Element selbst bei der Anbringung an einem Blechteil nicht absichtlich verformt wird. Vielmehr wird das Blechmaterial verformt, um dieses in Eingriff mit Hinterschneidungen des jeweiligen Einpresselements zu bringen. Es sind auch Einpresselemente bekannt, bei denen keine Hinterschnitte vorgesehen sind. Diese werden dann nur durch eine Presskraft gehalten. Grundsätzlich können Einpresselemente ebenfalls selbststanzend sein.

Das Werkstück kann aus einem Metall gefertigt sein, beispielsweise ist es ein Blechbauteil.

Zur Befestigung eines Funktionselements an dem Werkstück sind Setzeinrichtungen vorgesehen. Diese umfassen in der Regel einen Führungskanal und einen in dem Führungskanal axial bewegbaren Stempel, mit dem das Funktionselement durch den Führungskanal bewegbar ist. Der Stempel kann dabei dazu vorgesehen sein, um das Funktionselement in die für den Setzvorgang geeignete Position in der Setzeinrichtung bzw. in dem Führungskanal zu bringen und in manchen Fällen während des Setzvorgangs auch in dieser Position zu fixieren. Das Setzen oder Fügen des Elements kann durch eine axiale Bewegung eines den Führungskanal umfassenden Setzkopfs der Setzeinrichtung erfolgen. Grundsätzlich ist aber auch denkbar, dass das Setzen oder Fügen durch eine Bewegung des Stempels erfolgt.

Ferner ist eine Zufuhreinrichtung vorgesehen, die einen Zufuhrkanal umfasst, der in den Führungskanal mündet. Die Funktionselementen werden, beispielsweise durch Druckluft, durch den Zufuhrkanal herangeführt. Bei einem Übergang von dem Zufuhrkanal in den Führungskanal muss das Funktionselement umgelenkt werden. Dabei kann das Funktionselementen auf eine innere Wanderung des Führungskanals oder auf andere Komponenten der Setzeinrichtung auftreffen. Die damit einhergehenden Belastungen führen einerseits zu einem Verschleiß der Komponenten der Setzeinrichtung, andererseits können Beschädigungen an dem Funktionselement selbst auftreten.

Es ist eine Aufgabe der vorliegenden Erfindung, eine Setzeinrichtung zu schaffen, bei der die vorstehend beschriebenen Probleme vermieden werden.

Diese Aufgabe wird durch eine Setzeinrichtung mit den Merkmalen des Anspruchs 1 gelöst.

Erfindungsgemäß ist eine Wirbelstromeinheit vorgesehen, mit der ein Magnetfeld erzeugbar ist, das einen Bremsabschnitt des Zufuhrkanals durchsetzt, so dass eine Geschwindigkeit eines in dem Zufuhrkanal bewegten Funktionselements reduzierbar ist.

Mit anderen Worten beruht das erfindungsgemäße Konzept darauf, in dem Bremsabschnitt des Zufuhrkanals ein Magnetfeld bereitzustellen, dass in einem den Bremsabschnitt durchtretenden Funktionselement Wirbelströme erzeugt. Die induzierten Wirbelströme sind die Quelle von Magnetfeldern, die dem Magnetfeld der Wirbelstromeinheit entgegen gerichtet sind, sodass das Funktionselement abgebremst wird.

Verglichen mit herkömmlichen Setzeinrichtungen sind die von dem Zufuhrkanal in den Führungskanal übertretende Funktionselemente deutlich langsamer, sodass die in diesem Zusammenhang auftretenden Belastungen reduziert sind. Dies wiederum führt einerseits zu einem geringeren Verschleiß der Komponenten der Setzeinrichtung, andererseits wird die Gefahr von Beschädigungen der Funktionselemente deutlich vermindert.

Das erfindungsgemäße Konzept lässt sich auf eine beliebige Art von Funktionselementen, wie beispielsweise Bolzenelemente oder Mutterelemente, die als (selbststanzende) Niet- oder Einpresselemente ausgebildet sein können, anwenden. Es ist nicht nur auf einstückige sondern auch auf mehrstückige Funktionselemente anwendbar. Einzige Voraussetzung ist, dass die Funktionselemente zumindest abschnittsweise elektrisch leitfähig sind. Besonders gute Ergebnisse werden bei zumindest teilweise, insbesondere vollständig metallischen Funktionselementen erzielt.

Weitere Ausführungsformen der Erfindung sind in den Ansprüchen, der Beschreibung und den beigefügten Zeichnungen angegeben.

Gemäß einer Ausführungsform der vorliegenden Erfindung ist mit der Wirbelstromeinheit ein Magnetfeld erzeugbar, das den Bremsabschnitt des Zufuhrkanals durchsetzt, so dass eine Geschwindigkeit eines in dem Zufuhrkanal bewegten Funktionselements erhöhbar ist. Das heißt die Wirbelstromeinheit kann auch zum Beschleunigen des Funktionselements eingerichtet und ausgebildet sein. Dies ist beispielsweise vorteilhaft, wenn das Funktionselement im Zufuhrkanal nicht ausreichend schnell ist, um in den Setzkopf zu gelangen.

Gemäß einer weiteren Ausführungsform der vorliegenden Erfindung umfasst die Wirbelstromeinheit zumindest eine Spuleneinheit. Es können auch mehrere Wirbelstromeinheiten vorgesehen sein, die in axialer Richtung des Bremsabschnitt hintereinander angeordnet sind. Alternativ oder zusätzlich ist denkbar, dass in Umfangsrichtung des Bremsabschnitts verteilt angeordnete Spuleneinheiten vorgesehen sind.

Beispielsweise umfasst die Wirbelstromeinheit zumindest ein Spulenpaar, das einander gegenüberliegend beidseitig des Zufuhrkanals angeordnet ist. Das Spulenpaar kann so bestromt werden, dass es ein (z.B. möglichst homogenes) Magnetfeld in zumindest einem Abschnitt des Bremsabschnitts erzeugt wird, das im Wesentlichen senkrecht zu der Bewegungsrichtung des Funktionselements im Bereich des Bremsabschnitts ausgerichtet ist.

Gemäß einer konstruktiv sehr einfachen Bauweise umfasst die Wirbelstromeinheit zusätzlich oder alternativ zu der zumindest einen Spuleneinheit permanentmagnetische Elemente zur Erzeugung des abbremsenden Magnetfelds in dem Bremsabschnitt.

Die Ausgestaltung des Magnetfelds (z.B. Geometrie und/oder Feldstärke und/oder Grad der Homogenität/Inhomogenität im Bereich des Bremsabschnitts) kann bedarfsgerecht gewählt werden, um den jeweils vorliegenden Bedingungen bestmöglich Rechnung tragen zu können. Eine Anpassung des Magnetfelds kann insbesondere auch im Hinblick auf die Eigenschaften und/oder Geometrie der abzubremsen Funktionselemente erfolgen.

Gemäß einer weiteren Ausführungsform der Setzeinrichtung ist eine Steuereinheit vorgesehen, mit der die Wirbelstromeinheit bedarfsgerecht betreibbar ist. Grundsätzlich ist denkbar, dass die Wirbelstromeinheit während eines Betriebs der Setzeinrichtung im Wesentlichen konstant bestromt wird. Bevorzugt ist die Wechselstromeinheit jedoch mithilfe der Steuereinheit variabel bestrombar, um sich ändernden Bedingungen berücksichtigen zu können.

Die Steuereinheit kann dazu eingerichtet und ausgebildet sein, zumindest einen charakteristischen Betriebsparameter der Wirbelstromeinheit zu ermitteln. Beispielsweise kann vorgesehen sein, dass ein bestimmtes Magnetfeld durch die Wirbelstromeinheit erzeugt wird. Bei einem Durchtritt eines Elements durch den Bremsabschnitt und die dort erfolgende Abbremsung des Funktionselements wird das Magnetfeld in dem Bremsabschnitt geändert, was eine (kurzzeitige) Änderung der elektrischen Betriebsparameter der Wirbelstromeinheit nach sich zieht. Eine solche zeitliche Änderung, beispielsweise eine Spannungsänderung, kann genutzt werden, um die Prozesssicherheit zu erhöhen. Beispielsweise ist das Maß der Änderung ein Hinweis darauf, ob überhaupt ein elektrisch leitfähiges Funktionselement den Bremsabschnitt durchtritt. Die Charakteristik der Änderung (z.B. hinsichtlich Amplitude und/oder Dauer) kann ein Hinweis auf die Eigenschaften des Elements (z.B. elektrische Leitfähigkeit und/oder Formgebung des Elements) und/oder die Bewegung des Elements (z.B. dessen Geschwindigkeit) sein.

Eine Analyse des zeitlichen Verlaufs zumindest eines charakteristischen Betriebsparameters der Wirbelstromeinheit ermöglicht somit auf einfache Weise eine Überwachung der Setzeinrichtung. Ergibt die Analyse eine zu große Abweichung von den erwarteten bzw. vorgegebenen Werten, kann ein Warnsignal ausgegeben werden, das beispielsweise zur (automatischen) Beeinflussung (z.B. Abschaltung) der Setzeinrichtung genutzt werden kann. Mit anderen Worten kann die Wirbelstromeinheit auch als Messeinrichtung genutzt werden.

Die Zufuhreinrichtung kann zumindest eine Sensoreinheit umfassen, mit der zumindest ein charakteristischer Parameter des Funktionselements und/oder zumindest ein charakteristischer Parameter einer Bewegung des Funktionselements in dem Zufuhrkanal erfassbar ist. Eine solche Sensoreinheit kann beispielsweise ein induktiver Sensor oder ein Magnetfeldsensor (z.B. ein Hall-Sensor) sein. Eine oder mehrere Spulen können ebenfalls als Sensoren genutzt werden.

Die Sensoreinheit ist bevorzugt der Wirbelstromeinheit vorgelagert, kann aber auch in Bewegungsrichtung des Elements hinter der Wirbelstromeinheit angeordnet sein.

Mithilfe der Sensoreinheit kann beispielsweise eine elektrische Leitfähigkeit und/oder Magnetisierung des Funktionselements ermittelt werden. Sie kann - zusätzlich oder alternativ - auch dazu genutzt werden, zumindest einen Bewegungsparameter (beispielsweise die Geschwindigkeit) des Funktionselements zu bestimmen.

Die von der Sensoreinheit ermittelten Daten bzw. die auf Basis der ermittelten Daten bestimmten Eigenschaften des Funktionselements bzw. der Bewegung des Funktionselements können genutzt werden, um die Wirbelstromeinheit bedarfsgerecht zu betreiben.

Um bei Betrieb der Wirbelstromeinheit erzeugte Magnetisierungen von Komponenten der Setzeinrichtung und/oder des Funktionselements entfernen zu können, kann zumindest eine Entmagnetisierungseinrichtung vorgesehen sein. Magnetisierungen von Komponenten der Setzeinrichtung können bei geeigneter Auslegung und Ansteuerung durch die Wirbelstromeinheit reduziert oder sogar entfernt werden, beispielsweise in einer Produktionspause. Zu diesem Zweck wird von der Wirbelstromeinheit ein magnetisches Wechselfeld aufgebaut, das allmählich abklingt. Alternativ oder zusätzlich kann eine separate Entmagnetisierungseinrichtung vorgesehen sein, etwa eine entsprechende Spulenanordnung. Hinter der Wirbelstromeinheit könnte das durch den Bremsprozess magnetisierte Funktionselemente mit Hilfe einer solchen Spulenanordnung zumindest teilweise zu entmagnetisieren.

Die Erfindung betrifft ferner eine Elementzufuhreinrichtung zum Transport von Funktionselementen umfassend einen Transportkanal und zumindest eine Spuleneinheit, mit der ein Magnetfeld erzeugbar ist, das einen Wirkabschnitt des Transportkanals durchsetzt, so dass eine Geschwindigkeit eines in dem Transportkanal bewegten Funktionselements reduzierbar oder erhöhbar ist.

Die Spuleneinheit kann bedarfsgerecht bestromt werden, um die Geschwindigkeit des Funktionselements auf einen gewünschten Wert einzustellen.

Das erfindungsgemäße Konzept lässt sich auf eine beliebige Art von Funktionselementen, wie beispielsweise Bolzenelemente oder Mutterelemente, die als (selbststanzende) Niet- oder Einpresselemente ausgebildet sein können, anwenden. Es ist nicht nur auf einstückige sondern auch auf mehrstückige Funktionselemente anwendbar. Einzige Voraussetzung ist, dass die Funktionselemente zumindest abschnittsweise elektrisch leitfähig sind. Besonders gute Ergebnisse werden bei zumindest teilweise, insbesondere vollständig metallischen Funktionselementen erzielt.

Gemäß einer Ausführungsform der Elementzufuhreinrichtung ist der Transportkanal flexibel und/oder starr ausgestaltet. Insbesondere umfasst der Transportkanal einen oder mehrere flexible Abschnitte und einen oder mehrere starre Abschnitte, oder der Transportkanal ist über seine gesamte Länge flexibel oder starr. Beispielsweise umfasst der Transportkanal ein Polymer und/oder ein Metall.

Gemäß einer weiteren Ausführungsform ist der Transportkanal einstückig oder mehrstückig ausgestaltet. Insbesondere ist das Gehäuse des Transportkanals aus einem einzigen Werkstück gefertigt oder aus mehreren Werkstücken, die miteinander verbunden sind, insbesondere mittels einer Schraub-, Steck- Klebe- und/oder Schweißverbindung.

Gemäß einer weiteren Ausführungsform ist der Transportkanal geradlinig und/oder gekrümmt ausgestaltet. Insbesondere umfasst der Transportkanal einen oder mehrere gerade Abschnitte und einen oder mehrere gekrümmte Abschnitte, oder der Transportkanal ist über seine gesamte Länge gerade oder gekrümmt. Insbesondere kann der Transportkanal einen Winkel von größer oder gleich 10° bis kleiner oder gleich 90°, bevorzugt größer oder gleich 45° bis kleiner oder gleich 90°, einschließen.

Gemäß einer Ausführungsform ist ein Innendurchmesser des Transportkanals an eine bevorzugt radiale Abmessung des zu transportierenden Funktionselements angepasst. Beispielsweise umfasst das Funktionselement einen Befestigungsabschnitt zum Befestigen des Funktionselements an einem Werkstück, und einen mit dem Befestigungsabschnitt verbundenen Funktionsabschnitt, und der Transportkanal ist im Wesentlichen so breit wie der Funktionsabschnitt und/oder der Befestigungsabschnitt.

Gemäß einer Ausführungsform umfasst die Elementzufuhreinrichtung genau eine Spuleneinheit. Es können auch mehrere Spuleneinheiten vorgesehen sein, beispielsweise zwei, drei oder mehr, die entlang des Wirkabschnitts hintereinander angeordnet sind, bevorzugt äquidistant. Alternativ oder zusätzlich ist denkbar, dass in Umfangsrichtung des Wirkabschnitts verteilt angeordnete Spuleneinheiten vorgesehen sind.

Beispielsweise umfasst die Spuleneinheit zumindest ein Spulenpaar, das einander gegenüberliegend beidseitig des Transportkanals angeordnet ist.

Gemäß einer Ausführungsform umfasst die Elementzufuhreinrichtung zusätzlich zu der zumindest einen Spuleneinheit permanentmagnetische Elemente zur Erzeugung des abbremsenden oder beschleunigenden Magnetfelds in dem Wirkabschnitt.

Die Ausgestaltung des Magnetfelds (z.B. Geometrie und/oder Feldstärke und/oder Grad der Homogenität/Inhomogenität im Bereich des Wirkabschnitts) kann bedarfsgerecht gewählt werden, um den jeweils vorliegenden Bedingungen bestmöglich Rechnung tragen zu können. Eine Anpassung des Magnetfelds kann insbesondere auch im Hinblick auf die Eigenschaften und/oder Geometrie der abzubremsen oder zu beschleunigenden Funktionselemente erfolgen.

Gemäß einer weiteren Ausführungsform der Elementzufuhreinrichtung ist eine Steuereinheit vorgesehen, mit der die zumindest eine Spuleneinheit bedarfsgerecht betreibbar ist. Grundsätzlich ist denkbar, dass die Spuleneinheit während eines Betriebs der Elementzufuhreinrichtung im Wesentlichen konstant bestromt wird. Bevorzugt ist die Spuleneinheit jedoch mithilfe der Steuereinheit variabel bestrombar, um sich ändernden Bedingungen berücksichtigen zu können.

Die Steuereinheit kann dazu eingerichtet und ausgebildet sein, zumindest einen charakteristischen Betriebsparameter der Spuleneinheit zu ermitteln. Beispielsweise kann vorgesehen sein, dass ein bestimmtes Magnetfeld durch die Spuleneinheit erzeugt wird. Bei einem Durchtritt eines Elements durch den Wirkabschnitt und die dort erfolgende Abbremsung oder Beschleunigung des Funktionselements wird das Magnetfeld in dem Wirkabschnitt geändert, was eine (kurzzeitige) Änderung der elektrischen Betriebsparameter der Spuleneinheit nach sich zieht. Eine solche zeitliche Änderung, beispielsweise eine Spannungsänderung, kann genutzt werden, um die Prozesssicherheit zu erhöhen. Beispielsweise ist das Maß der Änderung ein Hinweis darauf, ob überhaupt ein elektrisch leitfähiges Funktionselement den Wirkabschnitt durchtritt. Die Charakteristik der Änderung (z.B. hinsichtlich Amplitude und/oder Dauer) kann ein Hinweis auf die Eigenschaften des Elements (z.B. elektrische Leitfähigkeit und/oder Formgebung des Elements) und/oder die Bewegung des Elements (z.B. dessen Geschwindigkeit) sein.

Eine Analyse des zeitlichen Verlaufs zumindest eines charakteristischen Betriebsparameters der Spuleneinheit ermöglicht somit auf einfache Weise eine Überwachung der Elementzufuhreinrichtung. Ergibt die Analyse eine zu große Abweichung von den erwarteten bzw. vorgegebenen Werten, kann ein Warnsignal ausgegeben werden, das beispielsweise zur (automatischen) Beeinflussung (z.B. Abschaltung) der Elementzufuhreinrichtung genutzt werden kann. Mit anderen Worten kann die Spuleneinheit auch als Messeinrichtung genutzt werden.

Die Elementzufuhreinrichtung kann zumindest eine Sensoreinheit umfassen, mit der zumindest ein charakteristischer Parameter des Funktionselements und/oder zumindest ein charakteristischer Parameter einer Bewegung des Funktionselements in dem Zufuhrkanal erfassbar ist. Eine solche Sensoreinheit kann beispielsweise ein induktiver Sensor oder ein Magnetfeldsensor (z.B. ein Hall-Sensor) sein. Eine oder mehrere Spulen können ebenfalls als Sensoren genutzt werden.

Die Sensoreinheit ist bevorzugt der Spuleneinheit vorgelagert, kann aber auch in Bewegungsrichtung des Elements hinter der Spuleneinheit angeordnet sein.

Mithilfe der Sensoreinheit kann beispielsweise eine elektrische Leitfähigkeit und/oder Magnetisierung des Funktionselements ermittelt werden. Sie kann - zusätzlich oder alternativ - auch dazu genutzt werden, zumindest einen Bewegungsparameter (beispielsweise die Geschwindigkeit) des Funktionselements zu bestimmen.

Die von der Sensoreinheit ermittelten Daten bzw. die auf Basis der ermittelten Daten bestimmten Eigenschaften des Funktionselements bzw. der Bewegung des Funktionselements können genutzt werden, um die Spuleneinheit bedarfsgerecht zu betreiben.

Um bei Betrieb der Spuleneinheit erzeugte Magnetisierungen von Komponenten der Elementzufuhreinrichtung und/oder des Funktionselements entfernen zu können, kann zumindest eine Entmagnetisierungseinrichtung vorgesehen sein. Magnetisierungen von Komponenten der Elementzufuhreinrichtung können bei geeigneter Auslegung und Ansteuerung durch die Spuleneinheit reduziert oder sogar entfernt werden, beispielsweise in einer Produktionspause. Zu diesem Zweck wird von der Spuleneinheit ein magnetisches Wechselfeld aufgebaut, das allmählich abklingt. Alternativ oder zusätzlich kann eine separate Entmagnetisierungseinrichtung vorgesehen sein, etwa eine entsprechende Spulenanordnung. Hinter der Spuleneinheit könnte das durch den Bremsprozess magnetisierte Funktionselement mit Hilfe einer solchen Spulenanordnung zumindest teilweise entmagnetisiert werden.

Es versteht sich, dass die zuvor in Bezug auf die Wirbelstromeinheit der Setzeinrichtung genannten Merkmale und Vorteile in analoger Weise auf die Spuleneinheit der Elementzufuhreinrichtung übertragbar sind (und umgekehrt). Gleiches gilt für den Zufuhrkanal und den Transportkanal

Die Erfindung betrifft ferner ein System umfassend eine Setzeinrichtung gemäß zumindest einer der zuvor genannten Ausführungsformen der Setzeinrichtung und eine mit dem Zufuhrkanal der Setzeinrichtung in Verbindung stehende Elementzufuhreinrichtung gemäß zumindest einer der zuvor genannten Ausführungsformen der Elementzufuhreinrichtung.

Das heißt in dem System können der Setzeinrichtung Funktionselemente mit einer wohldefinierten Geschwindigkeit mittels der Elementzufuhreinrichtung zugeführt werden.

Die Erfindung betrifft ferner ein Verfahren zum Betrieb einer Setzeinrichtung zur Befestigung eines Funktionselements an einem Werkstück, insbesondere einer Setzeinrichtung gemäß zumindest einer der vorstehend beschriebenen Ausführungsformen, wobei die Setzeinrichtung einen Führungskanal und einen in dem Führungskanal axial bewegbaren Stempel umfasst, mit dem das Funktionselement durch den Führungskanal bewegbar ist, wobei eine Zufuhreinrichtung vorgesehen ist, die einen Zufuhrkanal umfasst, der in den Führungskanal mündet, wobei eine Wirbelstromeinheit vorgesehen ist, mit der ein Magnetfeld erzeugt wird, das einen Bremsabschnitt des Zufuhrkanals durchsetzt, so dass eine Geschwindigkeit eines in dem Zufuhrkanal bewegten Funktionselements reduziert wird.

Die Wirbelstromeinheit kann zumindest eine Spuleneinheit umfassen, die bedarfsgerecht bestromt wird.

Die Bestromung der Spuleneinheit kann in Abhängigkeit eines charakteristischen Parameters des Funktionselements und/oder eines charakteristischen Parameters einer Bewegung des Funktionselements in dem Zufuhrkanal angepasst werden.

Gemäß einer Ausführungsform des Verfahrens wird mit der Wirbelstromeinheit ein Magnetfeld erzeugt, das den Bremsabschnitt des Zufuhrkanals durchsetzt, so dass eine Geschwindigkeit eines in dem Zufuhrkanal bewegten Funktionselements erhöht wird.

Gemäß einer weiteren Ausführungsform des Verfahrens werden der charakteristische Parameter des Funktionselements und/oder der charakteristische Parameter der Bewegung des Funktionselements mittels einer Sensoreinheit bestimmt, insbesondere wobei die Sensoreinheit der Wirbelstromeinheit vor- oder nachgelagert ist.

Zusätzlich oder alternativ kann ein charakteristischer Betriebsparameter der Wirbelstromeinheit erfasst werden, um einen charakteristischen Parameter des Funktionselements und/oder einen charakteristischen Parameter einer Bewegung des Funktionselements zu bestimmen.

Die Erfindung betrifft ferner ein Verfahren zum Betrieb einer Elementzufuhreinrichtung zum Transport von Funktionselementen, insbesondere einer Elementzufuhreinrichtung gemäß zumindest einer der vorstehend beschriebenen Ausführungsformen der Elementzufuhreinrichtung, wobei die Elementzufuhreinrichtung einen Transportkanal und zumindest eine Spuleneinheit umfasst, wobei das Verfahren das Erzeugen eines Magnetfelds mittels der Spuleneinheit umfasst, das einen Wirkabschnitt des Transportkanals durchsetzt, so dass eine Geschwindigkeit eines in dem Transportkanal bewegten Funktionselements reduziert oder erhöht wird.

Die Bestromung der Spuleneinheit kann in Abhängigkeit eines charakteristischen Parameters des Funktionselements und/oder eines charakteristischen Parameters einer Bewegung des Funktionselements in dem Transportkanal angepasst werden.

Gemäß einer Ausführungsform des Verfahrens werden der charakteristische Parameter des Funktionselements und/oder der charakteristische Parameter der Bewegung des Funktionselements mittels einer Sensoreinheit bestimmt, insbesondere wobei die Sensoreinheit der Spuleneinheit vor- oder nachgelagert ist.

Zusätzlich oder alternativ kann ein charakteristischer Betriebsparameter der Spuleneinheit erfasst werden, um einen charakteristischen Parameter des Funktionselements und/oder einen charakteristischen Parameter einer Bewegung des Funktionselements zu bestimmen.

Vorteilhafte Ausführungsformen der Erfindung werden rein beispielhaft unter Bezugnahme auf die beigefügten Zeichnungen erläutert. Es zeigen:
- Fig. 1: eine Ausführungsform der erfindungsgemäßen Setzeinrichtung,
- Fig. 2 bis 5: verschiedene Ausführungsformen einer Spulenanordnung der Wirbelstromeinheit, und
- Fig. 6 und 7: verschiedene Ausführungsformen der erfindungsgemäßen Elementzufuhreinrichtung.

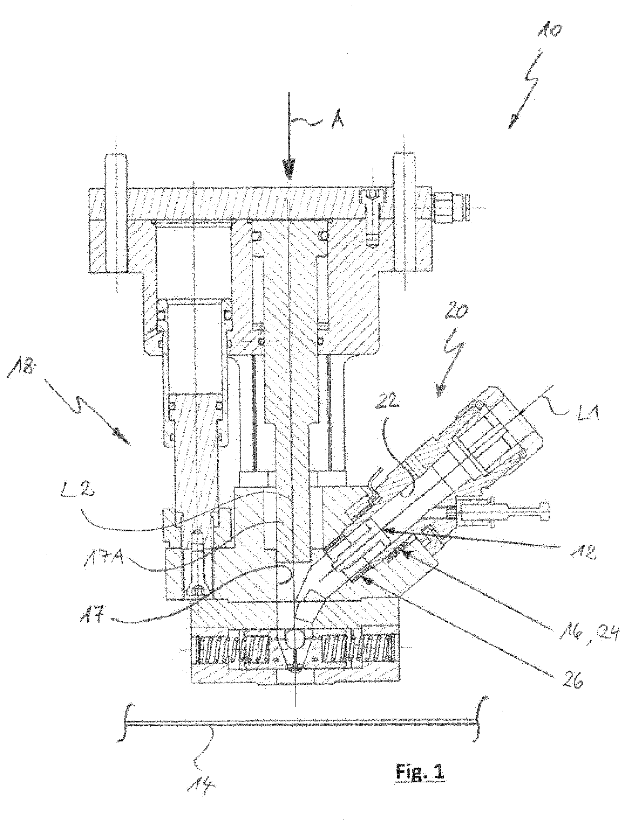

Fig. 1 zeigt eine Setzeinrichtung 10 von grundsätzlich bekannter Bauart. Sie dient zur Befestigung eines Funktionselements 12, hier beispielhaft ein metallisches Bolzenelement mit einem Außengewinde, an einem Werkstück 14, hier beispielhaft ein ebenes Blechteil. Die Funktionsweise der Setzeinrichtung 10 ist hinlänglich bekannt, sodass auf detaillierte Erläuterungen diesbezüglich verzichtet werden kann. Anders als bei herkömmlichen Setzeinrichtungen ist jedoch eine Wirbelstrombremse 16 vorgesehen, die nachstehend eingehender beschrieben wird.

Die Setzeinrichtung 10 weist einen Setzkopf 18 auf, der einen axialen Führungskanal 17 umfasst, durch den ein Funktionselements 12 mit Hilfe eines Stempels 17A in Setzrichtung A an das freie Ende des Kopf 18 geführt werden kann. Das Funktionselements 12 wird durch eine Zufuhreinrichtung 20 bereitgestellt, die über einen nicht gezeigten Schlauch mit einer Vorratseinrichtung für die Funktionselemente 12 in Verbindung steht. Die Zufuhreinrichtung 20 umfasst einen Zufuhrkanal 22, der in den Führungskanal 16 mündet. Eine Längsachse L1 des Kanals 22 und eine Längsachse L2 des Kanals 17 schließen einen Einschußwinkel ein.

Der Transport der Elemente 12 erfolgt beispielsweise pneumatisch. Dabei erreichen die Elemente 12 vergleichsweise hohe Geschwindigkeiten in dem Zufuhrkanal 22, sodass sie bei herkömmlichen Setzeinrichtungen mit erheblicher kinetischer Energie in etwa unter dem Einschußwinkel auf eine innere Wanderung des Führungskanals 17 auftreffen. Dies erzeugt Verschleiß im Bereich des Führungskanals 17. Außerdem kann das Element 12 beschädigt werden, beispielsweise in einem Einlaufbereich des Außengewindes des beispielhaft gezeigten Bolzenelements 12.

Um die vorstehend beschriebene Problematik zu beheben, ist die Wirbelstrombremse 16 vorgesehen, die in einem Abschnitt des Zufuhrkanals 22 angeordnet ist. Durch ihre Wirkung wird das Bolzenelement 12 abgebremst, sodass es mit deutlich geringerer Geschwindigkeit als bei üblichen Setzeinrichtungen in den Führungskanal 17 eintritt. Dies führt zu einer Verringerung des Verschleißes der Setzeinrichtung 10 und das Element 12 wird weniger belastet. Ein positiver Nebeneffekt ist, dass der Übergang des Elements 12 von dem Zufuhrkanal 22 in den Führungskanal 17 kontrollierter erfolgt.

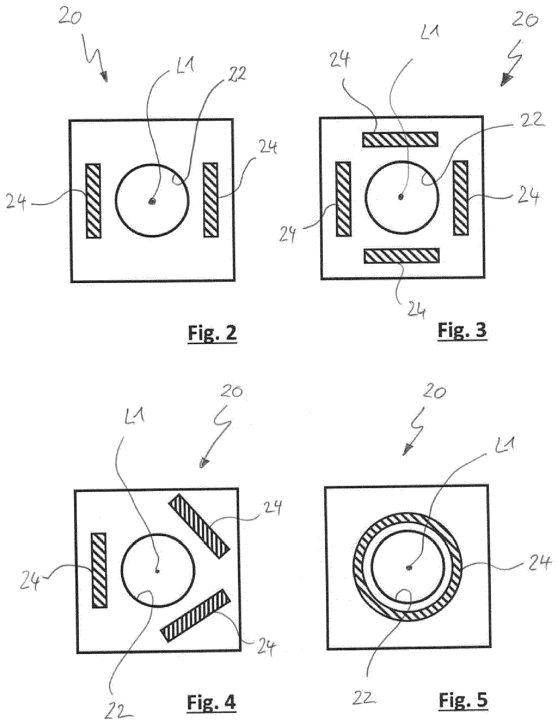

Im vorliegenden Ausführungsbeispiel wird die Wirbelstrombremse 16 beispielhaft durch eine den Zufuhrkanal 22 in Umfangsrichtung umgebende Spule 24 symbolisiert (siehe auch Fig. 5). Es versteht sich, dass die Anordnung und Ausgestaltung der Wirbelstrombremse 16 (z.B. Anordnung und Anzahl von Spulen, axiale Erstreckung der Wirbelstrombremse 16) an die jeweils vorliegenden Anforderungen angepasst werden kann. Weitere beispielhafte Spulenanordnungen sind in den Fig. 2 bis 4 gezeigt.

In den Fig. 2 bis 5 ist jeweils ein Querschnitt durch die Zufuhreinrichtung 20 im Bereich der Wirbelstrombremse 16 (also im Bremsabschnitt) in einer Ebene senkrecht zu der Längsachse L1 gezeigt.

Fig. 2 zeigt eine Spulenanordnung von zwei Spulen 24, die beidseits des Zufuhrkanals 22 angeordnet sind. Sie werden bevorzugt derart bestromt, dass sie im Bereich des Zufuhrkanals 22 ein Magnetfeld erzeugen, dass parallel zu der Bildebene angeordnet ist, d. h. senkrecht zu der Bewegungsrichtungen des Bolzenelements 12 bei seinem Weg durch den Bremsabschnitt. Es versteht sich, dass in axialer Richtung mehrere Spulenanordnungen hintereinander angeordnet sein können. Dies gilt auch für andere Spulenanordnungen.

In der Fig. 3 ist ein Spulenanordnung von vier Spulen 24 gezeigt, die jeweils um 90° versetzt angeordnet sind. In der Fig. 4 umfasst die Anordnung drei Spulen 24, die drehsymmetrisch um 120° versetzt angeordnet sind. In der Fig. 5 ist die in der Fig. 1 gezeigte Anordnung der Spule 24 noch einmal schematisch wiedergegeben.

Die Spulen 24 können bei Bedarf einen Kern aufweisen, um die magnetische Flussdichte zu erhöhen. Grundsätzlich ist es auch denkbar, anstelle von Spulen 24 (oder ergänzend) geeignete Anordnungen von Permanentmagneten zu verwenden, um das für die Wirbelstrombremsenwirkung erforderliche Magnetfeld zu erzeugen.

Die Wechselstrombremse 16 kann von einer nicht gezeigten Steuereinheit angesteuert werden, um die jeweils gewünschte Bremswirkung zu bewirken. Bei dem Durchtritt eines Elements 12 durch die Wirbelstrombremse 16 wird dessen Magnetfeld geändert, wodurch z.B. eine Spannungsspitze auftreten kann. Der zeitliche Verlauf der Spannung kann analysiert werden und ermöglicht Rückschlüsse u.a. auf die elektrische Leitfähigkeit des Elements 12 und dessen Geschwindigkeit. Eine zeitliche Überwachung der charakteristischen elektrischen Parameter der Wirbelstrombremse 16 ermöglicht somit eine Überwachung der Elementzufuhr und steigert damit die Prozesssicherheit.

Zusätzlich oder alternativ können Sensoren vorgesehen sein, mit denen auf charakteristische Eigenschaften des Elements 12 und/oder charakteristische Parameter seiner Bewegung geschlossen werden kann.

Rein beispielhaft ist in Fig. 1 eine Meßspule 26 vorgesehen, die in Bewegungsrichtung des Elements 12 hinter der Wirbelstrombremse 16 angeordnet ist. Bei dem Durchtritt des Elements 12 durch die Meßspule 26 wird in dieser eine Spannung induziert, deren zeitlicher Verlauf Rückschlüsse auf charakteristische Eigenschaften des Elements 12 und/oder charakteristische Parameter seiner Bewegung ermöglichen.

Die Daten der Meßspule 26 können mit denen der Wirbelstrombemse 16 kombiniert werden, um ergänzende Informationen zu erhalten.

Es versteht sich, dass unterschiedlichste Arten von Sensoren zum Einsatz gelangen können, beispielsweise induktive Sensoren, optische Sensoren, magnetische Sensoren und oder elektrische Sensoren. Die Anzahl und/oder Anordnung der Sensoren kann bedarfsgerecht gewählt werden. Es ist auch möglich, Sensoren vor der Wirbelsturmbremse 16 vorzusehen, beispielsweise um die Geschwindigkeit des sich der Wirbelstrombremse 16 nähernden Elements 12 abzuschätzen und die Wirbelstrombremse 16 entsprechend anzusteuern zu können.

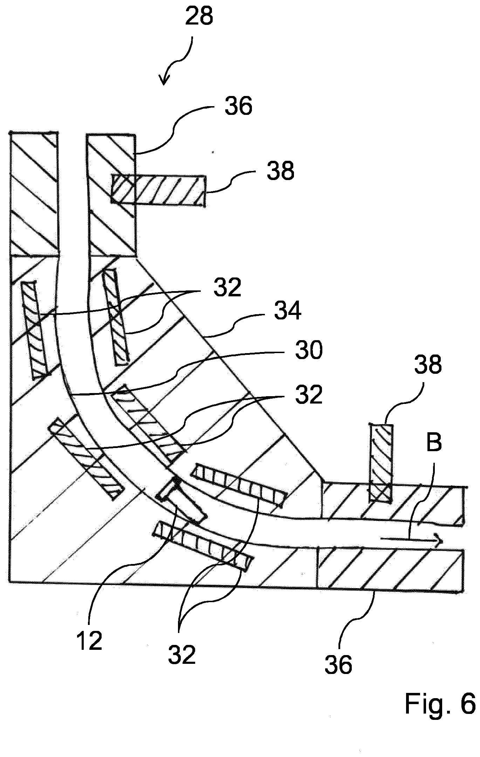

Fig. 6 zeigt eine Ausführungsform einer erfindungsgemäßen Elementzufuhreinrichtung 28. Die Elementzufuhreinrichtung 28 umfasst ein Segment 34, in dem ein gekrümmter Transportkanal 30 zur Führung eines zu transportierenden Funktionselements 12 ausgebildet ist. Das Segment 34 steht mit weiteren Komponenten 36 (z.B. Schläuchen und/oder Rohren) in Verbindung, die einen Transport des Elements 12 von einem Reservoir (nicht gezeigt) zu der Setzeinrichtung 10 ermöglichen.

Die Elementzufuhreinrichtung 28 ist beispielsweise dazu eingerichtet, Funktionselemente 12 von dem Reservoir aufzunehmen und in den Zufuhrkanal 22 einzuschießen. Sie kann aber auch dazu verwendet werden, pneumatisch in Richtung des Zufuhrkanals 22 eingeschossene Elemente weiter zu beschleunigen oder abzubremsen.

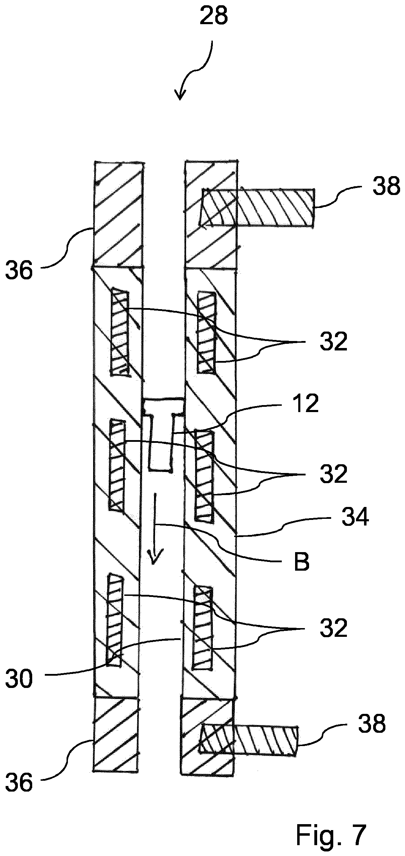

In dem gezeigten Ausführungsbeispiel schließt der Transportkanal 30 einen Winkel von 90° ein. Der Transportkanal 30 kann je nach Bedarf aber auch einen anderen Winkel einschließen. Auch ist eine Ausgestaltung denkbar, bei der der Transportkanal 30 nicht gebogen, sondern gerade ist (siehe Fig. 7).

Der Innendurchmesser des Transportkanals 30 ist an die radiale Abmessung des Funktionselements 12 angepasst. Insbesondere ist der Transportkanal 30 im Wesentlichen so breit wie das Funktionselement 12, wobei ein gewisses Spiel zwischen der Wandung des Kanals 30 und dem Element 12 besteht.

In dem Segment 34 sind mehrere entlang des Transportkanals 30 verteilt angeordnete Spuleneinheiten 32 vorgesehen, die so bestromt werden, dass das Funktionselement 12 in der Richtung B bedarfsgerecht beschleunigt wird. Auf diese Weise wird das Funktionselement 12 durch den Kanal 30 bewegt. Zumindest eine oder alle der Spuleneinheiten 32 kann aber auch zum Abbremsen des Funktionselements 12 betrieben werden. Der Abschnitt des Transportkanals 30, in dem die Spuleneinheiten 32 bei Bestromung ein Magnetfeld erzeugen, das auf das Funktionselement 12 wirkt, wird als Wirkabschnitt bezeichnet.

In dem gezeigten Ausführungsbeispiel umfassen die Spuleneinheiten 32 jeweils eine Spule in einer Konfiguration gemäß Fig. 5. Es können auch andere Konfigurationen, insbesondere auch jene gemäß Fig. 2 bis 4 vorgesehen sein.

Außerdem kann vor und/oder nach dem Transportkanal 30 eine Sensoreinheit 38 zum Messen eines charakteristischen Parameters des Funktionselements 12 vorgesehen sein (siehe Fig. 6 und 7). Beispielsweise kann mittels einer dem Transportkanal 30 vorgelagerten Sensoreinheit 38 die Geschwindigkeit des Funktionselements 12 vor dem Eintritt des Funktionselements 12 in den Transportkanal 30 gemessen werden. Auf Basis der Messergebnisse können dann die Spuleneinheiten 32 bestromt werden. Mittels der dem Transportkanal 30 nachgelagerten Sensoreinheit 38 kann dann die Geschwindigkeit des Funktionselements 12 nach dem Austritt des Funktionselements 12 aus dem Transportkanal 30 überprüft werden.

Es können aber auch ein oder mehrere Sensoreinheit 38 zwischen den Spuleneinheiten 32 vorgesehen sein. Die Sensoreinheiten 38 der Elementzufuhreinrichtung 28 können wie die Meßspule 26 der Setzeinrichtung 10 eingerichtet und ausgebildet sein.

Die in Bezug auf die Fig. 6 und 7 beschriebene Elementzufuhreinrichtung 28 kann mit der Zufuhreinrichtung 20 der in der Fig. 1 gezeigten Setzeinrichtung 10 verbunden werden. Bei dem auf diese Weise gebildeten System ist der Transportkanal 30 mit dem Zufuhrkanal 22 verbunden. Je nach Bedarf kann die Zufuhreinrichtung 20 aber auch durch die Elementzufuhreinrichtung 28 ersetzt werden.

### Bezugszeichenliste

- 10: Setzeinrichtung
- 12: Funktionselement
- 14: Werkstück
- 16: Wirbelstrombremse
- 17: Führungskanal
- 17A: Stempel
- 18: Setzkopf
- 20: Zufuhreinrichtung
- 22: Zufuhrkanal
- 24: Spule
- 26: Meßspule
- 28: Elementzufuhreinrichtung
- 30: Transportkanal
- 32: Spuleneinheit
- 34: Segment
- 36: Komponente
- 38: Sensoreinheit

- A: Setzrichtung
- B: Beschleunigungsrichtung
- L1, L2: Längsachse des Kanals 22 bzw. des Kanals 17

## Patentansprüche

1. Setzeinrichtung (10) zur Befestigung eines Funktionselements (12) an einem Werkstück (14), insbesondere an einem Blechteil, umfassend einen Führungskanal (17) und einen in dem Führungskanal (17) axial bewegbaren Stempel (17A), mit dem das Funktionselement (12) durch den Führungskanal (17) bewegbar ist, wobei eine Zufuhreinrichtung (20) vorgesehen ist, die einen Zufuhrkanal (22) umfasst, der in den Führungskanal (17) mündet, und wobei eine Wirbelstromeinheit (16) vorgesehen ist, mit der ein Magnetfeld erzeugbar ist, das einen Bremsabschnitt des Zufuhrkanals (22) durchsetzt, so dass eine Geschwindigkeit eines in dem Zufuhrkanal (22) bewegten Funktionselements (12) reduzierbar ist.

2. Setzeinrichtung (10) nach Anspruch 1,
wobei die Wirbelstromeinheit (16) zumindest eine Spuleneinheit (24) umfasst.

3. Setzeinrichtung (10) nach Anspruch 1 oder 2,
wobei die Wirbelstromeinheit (16) zumindest ein Spulenpaar (24) umfasst, das einander gegenüberliegend beidseitig des Zufuhrkanals (22) angeordnet ist.

4. Setzeinrichtung (10) nach zumindest einem der vorstehenden Ansprüche, wobei eine Steuereinheit vorgesehen ist, mit der die Wirbelstromeinheit (16) bedarfsgerecht betreibbar, insbesondere variabel bestrombar ist.

5. Setzeinrichtung (10) nach Anspruch 4,
wobei die Steuereinheit dazu eingerichtet und ausgebildet ist, zumindest einen charakteristischen Betriebsparameter der Wirbelstromeinheit (16) zu ermitteln.

6. Setzeinrichtung (10) nach zumindest einem der vorstehenden Ansprüche, wobei die Zufuhreinrichtung (20) zumindest eine Sensoreinheit (26) umfasst, mit der zumindest ein charakteristischer Parameter des Funktionselements (12) und/oder zumindest ein charakteristischer Parameter einer Bewegung des Funktionselements (12) in dem Zufuhrkanal (22) erfassbar ist.

7. Setzeinrichtung (10) nach zumindest einem der vorstehenden Ansprüche, wobei die Setzeinrichtung (10) zumindest eine Entmagnetisierungseinrichtung umfasst

8. Setzeinrichtung (10) nach Anspruch 7,
wobei eine Steuereinheit vorgesehen ist, die dazu eingerichtet und ausgebildet ist, die Wirbelstromeinheit (16) als Entmagnetisierungseinrichtung zu betreiben.

9. Elementzufuhreinrichtung (28) zum Transport von Funktionselementen (12), umfassend einen Transportkanal (30) und zumindest eine Spuleneinheit (32), mit der ein Magnetfeld erzeugbar ist, das einen Wirkabschnitt des Transportkanals (30) durchsetzt, so dass eine Geschwindigkeit eines in dem Transportkanal (30) bewegten Funktionselements (12) reduzierbar oder erhöhbar ist.

10. System umfassend eine Setzeinrichtung (10) gemäß zumindest einem der Ansprüche 1 bis 8 und eine mit dem Zufuhrkanal (22) der Setzeinrichtung (10) in Verbindung stehende Elementzufuhreinrichtung (28) gemäß Anspruch 9.

11. Verfahren zum Betrieb einer Setzeinrichtung (10) zur Befestigung eines Funktionselements (12) an einem Werkstück (14), insbesondere einer Setzeinrichtung (10) gemäß zumindest einem der Ansprüche 1 bis 8, wobei die Setzeinrichtung (10) einen Führungskanal (17) und einen in dem Führungskanal (17) axial bewegbaren Stempel (17A) umfasst, mit dem das Funktionselement (12) durch den Führungskanal (17) bewegbar ist, wobei eine Zufuhreinrichtung (20) vorgesehen ist, die einen Zufuhrkanal (22) umfasst, der in den Führungskanal (17) mündet, wobei eine Wirbelstromeinheit (16) vorgesehen ist, mit der ein Magnetfeld erzeugt wird, das einen Bremsabschnitt des Zufuhrkanals (22) durchsetzt, so dass eine Geschwindigkeit eines in dem Zufuhrkanal (22) bewegten Funktionselements (12) reduziert wird.

12. Verfahren nach Anspruch 11,
wobei die Wirbelstromeinheit (16) zumindest eine Spuleneinheit (24) umfasst, die bedarfsgerecht bestromt wird.

13. Verfahren nach Anspruch 11 oder 12,
wobei die Bestromung der Spuleneinheit (24) in Abhängigkeit zumindest eines charakteristischen Parameters des Funktionselements (12) und/oder zumindest eines charakteristischen Parameters einer Bewegung des Funktionselements (12) in dem Zufuhrkanal (22) angepasst wird.

14. Verfahren nach Anspruch 13,
wobei der charakteristische Parameter des Funktionselements (12) und/oder der charakteristische Parameter der Bewegung des Funktionselements (12) mittels zumindest einer Sensoreinheit (26) bestimmt wird, insbesondere wobei die Sensoreinheit der Wirbelstromeinheit (16) vor- oder nachgelagert ist.

15. Verfahren nach Anspruch 13 oder 14,
wobei zumindest ein charakteristischer Betriebsparameter der Wirbelstromeinheit (16) erfasst wird, um zumindest einen charakteristischen Parameter des Funktionselements (12) und/oder zumindest einen charakteristischen Parameter einer Bewegung des Funktionselements (12) zu bestimmen.
